# EUROPÄISCHE PATENTSCHRIFT

(11) **EP 1 554 169 B1**
(45) Veröffentlichungstag und Bekanntmachung des Hinweises auf die Patenterteilung: **24.09.2008**
(21) Anmeldenummer: 03766185.7
(22) Anmeldetag: 16.07.2003
(51) Int. Cl.: B62D 5/04

(54) **VERFAHREN ZUR BESTIMMUNG EINES LENKRADMOMENTS**
METHOD FOR DETERMINING A STEERING-WHEEL TORQUE
PROCEDE DE DETERMINATION D'UN COUPLE DE VOLANT DE DIRECTION

(30) Priorität: 31.07.2002 DE 10235041
(43) Veröffentlichungstag der Anmeldung: 20.07.2005
(73) Patentinhaber: Daimler AG, 70327 Stuttgart (DE)
(72) Erfinder: BERNZEN, Werner, 71139 Ehningen (DE); HUBER, Wilfried, 75395 Ostelsheim (DE); MAASS, Volker, 70563 Stuttgart (DE); MOSER, Martin, 70736 Fellbach (DE); SCHNECKENBURGER, Reinhold, 71277 Rutesheim (DE); URBAN, Christian, 71636 Ludwigsburg (DE)
(86) Internationale Anmeldenummer: PCT/EP2003/007697
(87) Internationale Veröffentlichungsnummer: WO 2004/012976

(56) Entgegenhaltungen:
- DE-A- 4 325 413
- DE-A- 19 650 691
- DE-A- 19 912 169

## Beschreibung

Die Erfindung betrifft ein Verfahren zur Bestimmung eines Lenkradmoments für das Lenkrad eines Kraftfahrzeugs gemäß dem Oberbegriff des Patentanspruchs 1.

Aus der DE 23 48 317 A1 geht ein Verfahren zur Kompensation von Störeffekten hervor, bei dem vorgesehen ist, dem Fahrer gegenüber ein Lenkmoment zu erzeugen, das Störkräfte signalisiert. Dabei wird das Lenkmoment derart erzeugt, dass die vom Fahrer dem Lenkmoment entgegen gebrachten Kräfte die Störkräfte kompensieren. Das erzeugte Lenkmoment wirkt also in Richtung einer die Fahrsituation verschlechternden Betätigung des Lenkrads.

Diese Vorgehensweise ist dann nachteilig, wenn der Fahrer das erforderliche Lenkmoment nicht aufbringt. Der gewünschte Kompensationseffekt tritt dann nicht auf.

Darüber hinaus ist es aus dem Stand der Technik bekannt, Lenkeingriffe vorzunehmen, um einen kritischen Fahrzustand zu stabilisieren. Hierzu ist beispielsweise aus der DE 196 50 691 C2 bekannt, einen Gesamt-Rad-Einschlagwinkel additiv aus dem vom Fahrer kommandierten Rad-Einschlagwinkel und einem kinematisch berechneten Zusatz-Lenkwinkel zu ermitteln. Diese Vorgehensweise ist zwar geeignet, bei kritischen Fahrzuständen stabilisierend einzugreifen, dieser Eingriff ist jedoch vom Verhalten des Fahrers unabhängig, eine Rückmeldung an den Fahrer erfolgt allenfalls indirekt.

Aus der DE 199 12 169 A1 geht ein Verfahren zum Betreiben einer Steer-by-Wire-Lenkung eines Fahrzeugs hervor, bei dem durch geeignete Bestimmung eines Soll-Handmoments ein an einem Lenkrad wirkendes Rückstellmoment derart modifiziert wird, dass der Fahrer Informationen über den Fahrbahnzustand sowie das Fahrverhalten des Fahrzeugs erhält. Die Ermittlung des Soll-Handmoments erfolgt unter anderem durch Verwendung eines Einspurmodells, mithin also eines Achsmodells des Fahrzeugs.

Das Lenkverhalten eines Fahrzeugs und die für einen Lenkeinschlag erforderliche Betätigungskraft des Lenkrads ist von der konstruktiven Ausbildung der gelenkten Achse, im wesentlichen also von der konstruktiven Ausbildung der Achse der gelenkten Räder abhängig. Wesentliche konstruktive Merkmale sind Vorspur, Lenkrollhalbmesser, Sturz, Spreizungswinkel und bei an der gelenkten Achse angetriebenen Fahrzeugen auch der Störkrafthebelarm. Dabei wird die Achskonstruktion in Abhängigkeit weiterer konstruktiver Gegebenheiten des Fahrzeugs, wie z. B. Gewicht, Achslastverteilung, Fahrgeschwindigkeiten, so abgestimmt, dass über einen möglichst großen Bereich der Fahrzeugnutzung hinweg Komfort und Fahrsicherheit gewährleistet sind und gleichzeitig ein für den Fahrer angenehmes Lenkverhalten vorliegt. Bei dieser Abstimmungsarbeit treten unterschiedliche Zielkonflikte auf, so dass nicht für alle Bereiche und Fahrsituationen eine optimale Konstruktion erzielbar ist.

Demgegenüber ist es Aufgabe der Erfindung, dem Fahrer eine optimierte Rückmeldung über die Lenkkräfte zu vermitteln und hierdurch eine erhöhte Fahrsicherheit zu erreichen.

Die der Erfindung zugrunde liegende Aufgabe wird durch ein erfindungsgemäßes Verfahren gelöst.

Bei dem Verfahren wird ein Lenkradmoment für das Lenkrad eines Kraftfahrzeugs bestimmt. Dabei wird durch den Fahrer ein Lenkwinkel für gelenkte Räder über das Lenkrad vorgegeben. Ein die Kräfte an der Fahrzeugachse repräsentierendes Lenkradmoment wirkt am Lenkrad. Anhand wenigstens eines Achsmodells wird ein Handmoment ermittelt. Das Handmoment wird dann dem Lenkradmoment überlagert.

Das Handmoment wird in Abhängigkeit einer aus gemessenen Größen abgeleiteten Fahrsituation ermittelt. Hierzu wird insbesondere eine Fahrsituation ermittelt. Aus der ermittelten Fahrsituation wird ein zum Fahren der Fahrsituation günstiges Achsmodell abgeleitet und das Handmoment aufgrund dieses Achsmodells ermittelt.

Durch die Ermittlung des Handmoments anhand des wenigstens einen Achsmodells wird es ermöglicht, das Lenkradmoment entsprechend einem Modell zu ermitteln, das nicht zwangsläufig den konstruktiven Gegebenheiten des Fahrzeugs entspricht. Es wird also ermöglicht, das dem Fahrer zurückgemeldete Lenkradmoment von den tatsächlich erforderlichen Lenkradmomenten zu entkoppeln, wobei gleichzeitig dennoch eine Rückmeldung erfolgt, die einem üblichen Verhalten einer Lenkung entspricht. Hierdurch wird der Fahrer zu einem Lenken am Lenkrad angeregt, das Lenkwinkel erzeugt, die einem besseren Fahrverhalten des Fahrzeugs entsprechen. Es bleibt möglich, eine feste Beziehung zwischen Lenkradwinkel und Lenkwinkel der gelenkten Räder aufrecht zu erhalten, beispielsweise über eine durchgehende mechanische Verbindung zwischen gelenkten Rädern und Lenkrad. Dennoch kann die Erfindung auch im Rahmen einer sogenannten Steer-by-Wire-Lenkung ohne durchgehende mechanische Verbindung verwendet werden. Durch die Erfindung wird daher ein gegenüber anderen Lenkungen optimiertes Lenkgefühl erzeugt und die Fahrsicherheit verbessert.

Gemäß einer vorteilhaften Ausgestaltung der Erfindung wird dabei das Handmoment so bestimmt, dass eine Betätigung des Lenkrads in eine fahrdynamisch günstige Richtung erleichtert und/oder eine in fahrdynamisch ungünstige Richtung erschwert wird. Die zusätzliche Berücksichtung fahrdynamischer Zustände und die Vorgabe eines Handmoments, das fahrdynamisch ungünstigen Zuständen entgegenwirkt, unterstützt den Fahrer in seiner Lenkaufgabe. Über das so erzeugte Handmoment wird eine fahrdynamisch günstige Betätigung erleichtert bzw. eine fahrdynamisch ungünstige Betätigung des Lenkrades durch den Fahrer erschwert, letztere ist dennoch nicht unmöglich. Der Fahrer ist also nicht der Aufgabe entbunden, die Lenkung in angemessener Weise zu betätigen, andererseits kann er auch das aufgebrachte Handmoment überwinden und ein anderes Verhalten als das fahrdynamisch günstigere vorgeben.

Eine bevorzugte Ausführungsform sieht vor, dass das Handmoment unter Verwendung eines Modells, insbesondere eines Beobachters ermittelt wird. Das Achsmodell kann insbesondere als Modell bzw. Beobachter im regelungstechnischen Sinne ausgebildet sein. Dabei werden aus messbaren Größen und einem vorgegebenen Achsmodell die sich aus dem Modell ergebenden Kräfte am Lenkrad ermittelt und dann als das zu erzeugende Handmoment am Lenkrad vorgegeben. Dabei muss das Modell bzw. der Beobachter nicht unbedingt die tatsächlichen Verhältnisse des Fahrzeugs wiederspiegeln. Die Parameter des Modells, wie Vorspur, Störkrafthebelarm, Nachlaufstrecke, Nachlaufwinkel, Lenkrollhalbmesser, Sturzwinkel und Spreizungswinkel, die - je nach Aufwand, verfügbarer Rechenleistung und erfolgter bzw. erforderlicher Modellierung - im Modell, wie einem Beobachter, Verwendung finden können, können hierzu von den tatsächlichen konstruktiven Gegebenheiten abweichen. Der Beobachter spiegelt dann ein anderes Verhalten als das Istverhalten des Fahrzeugs vor. Alternative Ausgestaltungen der Erfindung sehen vor, dass anstelle der Verwendung eines Beobachters die Ermittlung des Handmoments unter Verwendung eines Kennfelds erfolgt.

Es wird in weiterführender Ausgestaltung der Erfindung das Handmoment so ermittelt, dass das resultierende Moment aus Lenkradmoment und Handmoment dem Lenkradmoment des günstigen Achsmodells entsprechen. Diese Maßnahme führt in vorteilhafter Weise zur Vorgabe an die spezifische Fahrsituation angepasster Lenkwinkel durch den Fahrer.

Das Erkennen einer Fahrsituation aus gemessenen Größen ermöglicht eine Anpassung des Verhaltens an einzelne Fahrsituationen. Hierbei können beispielsweise Fahrsituationen wie "µ-split", Kurvenfahrt, Seitenwind, geringer Reibwert erkannt werden. Hierzu können insbesondere die Größen Bremsdruck, Radgeschwindigkeiten, Schwimmwinkel und Lenkwinkel und dergleichen verwendet werden.

Eine µ-split-Situation wird beispielsweise über unterschiedliche Bremsdrücke erkannt, wobei unterschiedliche Bremsdrücke nicht nur im Bremsfall bei Fahrzeugen auf Strecken mit unterschiedlichem Kraftschlussbeiwert auftauchen können, sondern auch im Antriebsfall, wenn eine Schlupfregelung das Durchdrehen eines Antriebsrades auf der Fahrzeugseite mit dem niedrigeren Kraftschlussbeiwert verhindert. Aus den Raddrehzahlen ist auch eine Kurvenfahrt ableitbar. Auch Schwimmwinkel und Radlenkwinkel sind messbare Größen, die die Erkennung von Seitenwindfahrt ermöglichen. Über den Radschlupf, der aus den Raddrehzahlen erfassbar ist, und Bremseingriffen (Radbremsdrücke bei Antiblockierbremseingriff und bei Bremseingriffen zur Antriebsschlupfregelung) kann eine Situation mit niedrigem Kraftschlussbeiwert erkannt werden.

Für alle erkannten fahrdynamischen Situationen kann nunmehr gemäß der Ausgestaltung der Erfindung ein an diese besondere Situation angepasste Ermittlung des Handmoments erfolgen, indem der Ermittlung des Handmoments jeweils ein spezifisches, an die Fahrsituation angepasstes Achsmodell zugrundegelegt wird. Anstelle der passenden Auswahl eines Achsmodells kann jeder erkennbaren Fahrsituation auch ein entsprechendes Kennfeld für das Handmoment zugeordnet werden. Dabei kann ein solches Kennfeld spezifisch angepasst sein oder aber aus vorab berechneten Achsmodellen abgeleitete Werte enthalten. Diese Vorgehensweise mindert die für die Durchführung der Handmomentenbestimmung erforderliche Rechenkapazität und Rechenleistung gegenüber modellbasierten Systemen.

Alternativ oder ergänzend kann gemäß der Erfindung das Handmoment in Abhängigkeit wenigstens eines Wertes aus vorgegebenen Soll-Fahrverhalten und Ist-Fahrverhalten ermittelt werden.

Weitere Ausgestaltungen der Erfindung sehen vor, dass das Handmoment unter Berücksichtigung wenigstens einer der fahrzeugbezogenen Größen Lenkwinkel, Gier-, Wank-, Roll-, Nickgeschwindigkeit, Fahrzeuggeschwindigkeit, Radgeschwindigkeiten, Radbremsdruck, Radbeschleunigung, Längs-, Quer-, Vertikalbeschleunigung, Lenkmoment und Radaufstützkräfte ermittelt wird, wobei diese Größen insbesondere in den verwendeten Achsmodellen und damit beim entsprechenden Modell bzw. Beobachter ihren Niederschlag finden. Dabei kann das Handmoment auch in Abhängigkeit wenigstens einer Einrichtung zur Erfassung des Straßenverlaufs, wie eines Navigationssystems oder einer optischen Erfassungseinrichtung ermittelt werden. Auch durch diese Einrichtungen ist es möglich, aus damit erfassten Daten die befahrene Fahrstrecke zu ermitteln und beispielsweise daraus ein bevorzugt zu verwendendes Achsmodell herzuleiten. Diese Systeme haben darüber hinaus den Vorteil, dass sie nicht nur die Feststellung eines aktuell vorliegenden Fahrzustandes ermöglichen sondern darüber hinaus auch prädikative Aussagen über zu erwartendes Verhalten möglich sind.

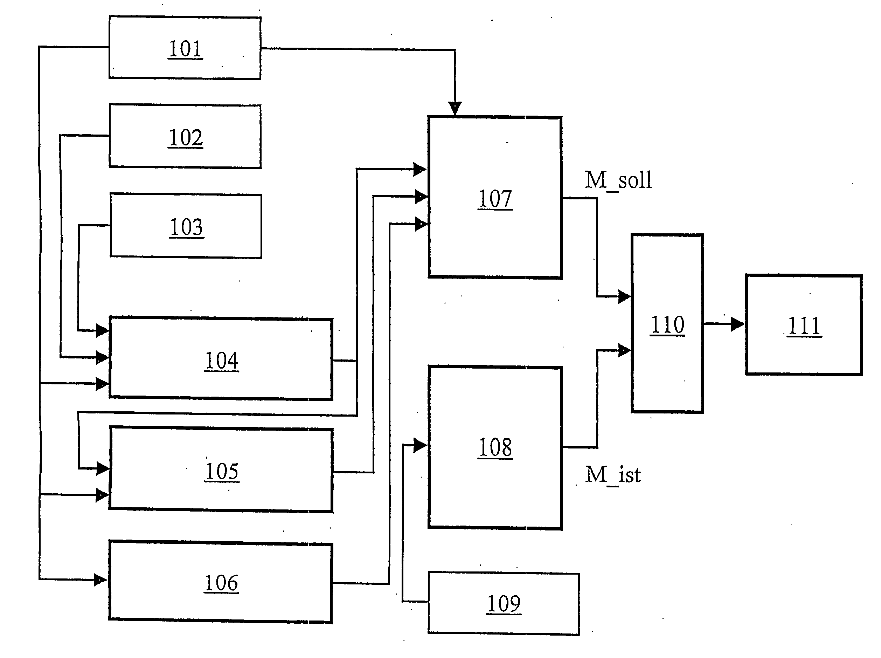

Im Übrigen ist die Erfindung neben den Ansprüchen auch in der Beschreibung dargelegt und nachfolgend anhand eines in der Zeichnung dargestellten Ausführungsbeispiels näher erläutert. Dabei zeigt die einzige Figur ein Blockdiagramm einer erfindungsgemäßen Bestimmung des Handmoments unter Verwendung von Beobachtern.

Das Diagramm der einzigen Figur zeigt in funktionaler Blockdarstellung ein Beispiel für die Ermittlung des Handmoments unter Verwendung zweier Modelle, wobei es sich bei den Modellen in dargestelltem Ausführungsbeispiel um Beobachter handelt. Der eine Beobachter dient dabei der Ermittlung des sich aus dem tatsächlich im Fahrzeug realisierten Fahrzeugmodell ergebenden Lenkmoment, während der andere Beobachter unter Verwendung eines an die erkannte Fahrsituation angepassten Achsmodells ein wünschenswertes Handmoment ermittelt.

Zur Ermittlung der Fahrsituation werden dem Fahrsituationserkenner 104 Messwerte von Sensor- und Auswerteeinrichtungen 101, 102 und 103 des Fahrzeugs zugeführt. Dabei handelt es sich bei den Sensoren 101 um Sensoren zur Bestimmung der Fahrzeugdynamik, also beispielsweise von Lenkwinkel, Giergeschwindigkeit, Schwimmwinkel, Fahrzeuggeschwindigkeit und Querbeschleunigung. Die Sensorsignale können nach geeigneter Verarbeitung als Messwerte beispielsweise über einen Datenbus der Steuereinheit für das Handmoment, in dem das erfindungsgemäße Verfahren umgesetzt wird, zugeführt werden. Die Sensorsignale können beispielsweise auch im Rahmen anderer Regelverfahren, wie in einem Antiblockiersystem oder einer Fahrdynamikregelung anfallen und dann an die Einrichtung zum Ermitteln des Handmoments weitergeleitet werden.

Die Sensoren 102 übermitteln Werte für die Radgeschwindigkeiten bzw. Raddrehzahlen der einzelner Räder, wenigstens der gelenkten Räder sowie gemessene oder modellgestützt berechnete Radbremsdrücke wenigstens der gelenkten Räder. Alternativ oder ergänzend zu Sensoren 101 und 102 kann auch ein Auswertesignal einer Auswerteeinheit 103 zugeführt werden, welche die Fahrstrecke oder die Fahrbahn mittels den Signalen einer optischen Erfassungseinrichtung wie einer Videokamera oder einem Satellitennavigationssystem erfasst und auswertet.

In dem Fahrsituationserkenner 104 wird das Vorliegen einer spezifischen Fahrsituation anhand der zugeführten Sensordaten erkannt. Das Ergebnis wird zum einem einem Fahrverhaltensoptimierer 105 und dem Achsmodell-Beobachter 107 zugeführt.

Dem Fahrverhaltensoptimierer 105 werden daneben auch noch die Sensordaten der Fahrzeugdynamik-Sensoren 101 zugeführt. Daraus wird ein Soll-Fahrzeugverhalten hinsichtlich der Dynamik des Fahrzeugs um die Hochachse abgeleitet, beispielsweise eine Soll-Giergeschwindigkeit und/oder ein Soll-Schwimmwinkel. Auch dieser Wert wird dem Achsmodell-Beobachter 107 zugeführt.

Darüber hinaus werden einem Ist-Fahrverhaltensermittler 106 die Daten der Fahrzeugdynamik-Sensoren 101 zugeführt. Hieraus werden fahrdynamische Größen des tatsächlichen Fahrzeugverhaltens abgeleitet und ebenfalls dem Achsmodell-Beobachter 107 zugeführt.

Parallel hierzu werden von Sensoren erfasste Raddaten 109, die das tatsächliche Radverhalten, wie die Radkräfte in unterschiedliche Richtungen repräsentieren erfasst, ausgewertet und dem Istmodell-Beobachter 108 zugeführt. Der Istmodell-Beobachter 108 ermittelt aufgrund eines Beobachters, der die tatsächliche Achskonstruktion wiedergibt, das tatsächlich von der Fahrzeugachse auf das Lenkrad zurückwirkende Lenkmoment M_ist. Dieser Wert wird einer Auswerteeinheit 110 zugeführt. Alternativ zu dem hier Dargestellten kann anstelle einer Ermittlung des Ist-Momentes M_ist des Lenkmoments an hand eines Modells oder Beobachters auch die Erfassung mittels Sensoren erfolgen.

Der Auswerteeinheit 110 wird daneben auch ein Wert für das Handmoment M_soll zugeführt, das in dem Achsmodell-Beobachter 107 aufgrund der ihm zugeführten Daten ermittelt wird. Dabei verwendet der Achsmodell-Beobachter einen in Abhängigkeit der Fahrsituation ausgewählten Beobachter für das Achsmodell. Das Achsmodell wird so ausgewählt, dass es für die erkannte Fahrsituation optimiert ist, wobei bei der Ermittlung auch die Regelabweichung zwischen dem Soll-Verhalten des Fahrzeugs und dem Ist-Verhalten des Fahrzeugs berücksichtigt werden kann.

In der Auswerteeinheit 110 wird dann die Regeldifferenz aus dem ermittelten Handmoment M_soll und dem Lenkmoment M_ist ermittelt, das Signal gefiltert und dann über einen Regler dem Handmomentensteller 111 zugeführt, der durch den Regler der Auswerteeinheit 110 im Sinne des Erzeugens des Handmoments M_soll angesteuert wird. Dies geschieht beispielsweise durch Überlagern eines entsprechenden Momentes so dass die Summe aus überlagerndem Moment und Lenkmoment M_ist das Handmoment M_soll ergibt.

## Patentansprüche

1. Verfahren zur Bestimmung eines Lenkradmomentes für das Lenkrad eines Kraftfahrzeugs, wobei
- über das Lenkrad durch den Fahrer ein Lenkwinkel für gelenkte Räder vorgegeben wird,
- ein die Kräfte an der Fahrzeugachse repräsentierendes Lenkradmoment wirkt, und
- anhand wenigstens eines Achsmodells ein Handmoment (M_soll) ermittelt wird, das dem Lenkradmoment (M_ist) überlagert wird, wobei
- das Handmoment (M_soll) in Abhängigkeit einer aus gemessenen Größen abgeleiteten Fahrsituation ermittelt wird,
**dadurch gekennzeichnet,**
**dass** aus der ermittelten Fahrsituation ein zum Fahren der Fahrsituation günstiges Achsmodell abgeleitet
und das Handmoment (M_soll) aufgrund dieses Achsmodells ermittelt wird.

2. Verfahren nach Anspruch 1,
**dadurch gekennzeichnet,**
**dass** das Handmoment (M_soll) so bestimmt wird, dass eine Betätigung des Lenkrades in eine fahrdynamisch günstige Richtung erleichtert wird.

3. Verfahren nach Anspruch 1 oder 2,
**dadurch gekennzeichnet,**
**dass** das Handmoment (M_soll) so bestimmt wird, dass eine Betätigung des Lenkrades in eine fahrdynamisch ungünstige Richtung erschwert wird.

4. Verfahren nach einem der Ansprüche 1 bis 3,
**dadurch gekennzeichnet,**
**dass** das Handmoment (M_soll) mittels eines Modells, insbesondere eines Beobachters, ermittelt wird.

5. Verfahren nach einem der vorhergehenden Ansprüche,
**dadurch gekennzeichnet,**
**dass** das Handmoment (M_soll) aus einem Kennfeld ermittelt wird.

6. Verfahren nach einem der vorhergehenden Ansprüche,
**dadurch gekennzeichnet,**
**dass** das Handmoment (M_soll) so ermittelt wird, dass das resultierende Moment aus Lenkradmoment (M_ist) und Handmoment (M_soll) dem Lenkradmoment des günstigen Achsmodells entspricht.

7. Verfahren nach einem der vorhergehenden Ansprüche,
**dadurch gekennzeichnet,**
**dass** das Handmoment (M_soll) in Abhängigkeit wenigstens eines Wertes aus Soll-Fahrverhalten und Ist-Fahrverhalten ermittelt wird.

8. verfahren nach einem der vorhergehenden Ansprüche,
**dadurch gekennzeichnet,**
**dass** das Handmoment (M_soll) unter Berücksichtigung wenigstens einer der fahrzeugbezogenen Größen Lenkwinkel, Gier-, Wank-, Roll-, Nickgeschwindigkeit, Fahrzeuggeschwindigkeit, Radgeschwindigkeiten, Radbremsdruck, Radbeschleunigung, Längs-, Quer-, Vertikalbeschleunigung, Lenkmoment und Radaufstützkräfte ermittelt wird.

9. Verfahren nach einem der vorhergehenden Ansprüche,
**dadurch gekennzeichnet,**
**dass** das Handmoment (M_soll) in Abhängigkeit wenigstens einer Einrichtung zur Erfassung des Straßenverlaufs, wie eines Navigationssystems oder einer optischen Erfassungseinrichtung, ermittelt wird.

10. Kraftfahrzeug mit einem Lenkrad zum Vorgeben eines Lenkwinkels durch einen Fahrer und mit einem Momentenerzeuger (111) zum Beaufschlagen des Lenkrades mit einem Handmoment (M_soll), wobei einem Fahrsituationserkenner (104) zur Erkennung einer spezifischen Fahrsituation des Kraftfahrzeugs Signale von Sensor- und Auswerteeinrichtungen (101, 102, 103) zur Bestimmung der Fahrzeugdynamik des Kraftfahrzeugs zugeführt werden,
**dadurch gekennzeichnet,**
**dass** ein Achsmodell-Beobachter (107) aus der ermittelten Fahrsituation ein zum Fahren der Fahrsituation günstiges Achsmodell auswählt und das Handmoment (M_soll) aufgrund dieses Achsmodells ermittelt.

## Claims

1. A method for determining a steering-wheel torque for the steering wheel of a motor vehicle,
- a steering angle for steered wheels being predefined by means of the steering wheel by the driver,
- a steering-wheel torque representing the forces on the vehicle axle acting on the steering wheel, and
- a manual torque (M_desired) being determined using at least one axle model and superimposed on the steering-wheel torque (M_actual),
- the manual torque (M_desired) being determined dependent on a driving situation derived from measured variables,
**characterised in that**
an axle model favourable for driving in the driving situation is derived from the determined driving situation, and the manual torque (M_desired) is determined on the basis of this axle model.

2. A method in accordance with claim 1,
**characterised in that**
the manual torque (M_desired) is determined such that actuating the steering wheel in a direction favourable in terms of vehicle dynamics is made easier.

3. A method in accordance with claim 1 or 2,
**characterised in that**
the manual torque (M_desired) is determined such that actuating the steering wheel in a direction unfavourable in terms of vehicle dynamics is made more difficult.

4. A method in accordance with one of claims 1 to 3,
**characterised in that**
the manual torque (M_desired) is determined by means of a model, in particular an observer.

5. A method in accordance with one of the preceding claims,
**characterised in that**
the manual torque (M_desired) is determined from a characteristic map.

6. A method in accordance with one of the preceding claims,
**characterised in that**
the manual torque (M_desired) is determined such that the sum of the steering-wheel torque (M_actual) and the manual torque (M_desired) corresponds to the steering-wheel torque of the favourable axle model.

7. A method in accordance with one of the preceding claims,
**characterised in that**
the manual torque (M_desired) is determined dependent on at least one value from the desired driving behaviour and the actual driving behaviour.

8. A method in accordance with one of the preceding claims,
**characterised in that**
the manual torque (M_desired) is determined taking into account at least one of the following vehicle-related variables: steering angle, yaw velocity, rolling angle velocity, roll velocity and pitching velocity, vehicle speed, wheel speeds, wheel braking pressure, wheel acceleration, longitudinal acceleration, transverse acceleration and vertical acceleration, steering torque and wheel supporting forces.

9. A method in accordance with one of the preceding claims,
**characterised in that**
the manual torque (M_desired) is determined dependent on at least one device for measuring the course of the road such as a navigation system or an optical measurement device.

10. A motor vehicle having a steering wheel for predefining a steering angle by means of a driver and having a torque generator (111) for applying a manual torque (M_desired) to the steering wheel, signals from sensor and evaluation devices (101, 102, 103) for determining the vehicle dynamics of the motor vehicle being fed to a driving situation identification device (104) to identify a specific driving situation of the motor vehicle,
**characterised in that**
an axle model observer (107) selects an axle model favourable for driving in the driving situation from the determined driving situation and determines the manual torque (M_desired) on the basis of this axle model.

## Revendications

1. Procédé de détermination d'un couple de volant pour le volant de direction d'un véhicule automobile, où
- un angle de direction pour les roues directrices est défini par le conducteur au moyen du volant,
- un couple de volant représentatif des efforts sur l'essieu du véhicule est actif, et
- un.couple manuel (M_consigne) est déterminé sur la base d'au moins un modèle d'essieu, et est superposé au couple de volant (M_effectif),
- le couple manuel (M_consigne) étant déterminé en fonction d'une situation de conduite déduite de grandeurs mesurées,
**caractérisé**
**en ce qu'**un modèle d'essieu favorable à la commande de la situation de conduite est déduit de la situation de conduite déterminée, et en ce que le couple manuel (M_consigne) est déterminé sur la base de ce modèle d'essieu.

2. Procédé selon la revendication 1,
**caractérisé**
**en ce que** le couple manuel (M_consigne) est déterminé de manière à faciliter une manoeuvre du volant dans un sens favorable à la dynamique de conduite.

3. Procédé selon la revendication 1 ou 2,
**caractérisé**
**en ce que** le couple manuel (M_consigne) est déterminé de manière à entraver une manoeuvre du volant dans un sens défavorable à la dynamique de conduite.

4. Procédé selon l'une des revendications 1 à 3,
**caractérisé**
**en ce que** le couple manuel (M_consigne) est déterminé au moyen d'un modèle, en particulier d'un observateur.

5. Procédé selon l'une des revendications précédentes,
**caractérisé**
**en ce que** le couple manuel (M_consigne) est déterminé à partir d'un diagramme caractéristique.

6. Procédé selon l'une des revendications précédentes,
**caractérisé**
**en ce que** le couple manuel (M_consigne) est déterminé de telle manière que le couple résultant du couple de volant (M_effectif) et du couple manuel (M_consigne) corresponde au couple de volant du modèle d'essieu favorable.

7. Procédé selon l'une des revendications précédentes,
**caractérisé**
**en ce que** le couple manuel (M_consigne) est déterminé en fonction d'au moins une valeur du comportement de conduite de consigne et du comportement de conduite effectif.

8. Procédé selon l'une des revendications précédentes,
**caractérisé**
**en ce que** le couple manuel (M_consigne) est déterminé en tenant compte d'au moins une des grandeurs relatives au véhicule que sont l'angle de direction, la vitesse de lacet, de roulis, de roulement, de tangage, la vitesse de véhicule, la vitesse de roue, la pression de freinage de roue, l'accélération de roue, l'accélération longitudinale, transversale, verticale, le couple de direction et les forces d'appuie de roue.

9. Procédé selon l'une des revendications précédentes,
**caractérisé**
**en ce que** le couple manuel (M_consigne) est déterminé en fonction d'au moins un dispositif de saisie du tracé de route, tel qu'un système de navigation ou un dispositif de saisie optique.

10. Véhicule automobile avec un volant de direction pour la définition d'un angle de direction par un conducteur, et avec un générateur de couple (111) pour l'application d'un couple manuel (M_consigne) sur le volant, où des signaux de dispositifs capteurs et analyseurs (101, 102, 103) pour la détermination de la dynamique de conduite du véhicule automobile sont délivrés à un détecteur de situation de conduite (104) pour la détection d'une situation de conduite spécifique du véhicule automobile,
**caractérisé**
**en ce qu'**un observateur de modèle d'essieu (107) sélectionne un modèle d'essieu favorable à la commande de la situation de conduite à partir de la situation de conduite déterminée, et détermine le couple manuel (M_consigne) sur la base de ce modèle d'essieu.
